(19)

Europäisches
Patentamt
European
Patent Office
Office européen
des brevets

(11) **EP 4 428 835 A1**

(12) **EUROPEAN PATENT APPLICATION**
published in accordance with Art. 153(4) EPC

(43) Date of publication:
**11.09.2024 Bulletin 2024/37**

(21) Application number: **22814278.2**

(22) Date of filing: **18.08.2022**

(51) International Patent Classification (IPC):
*G06V 20/54* (2022.01)    *G06T 7/90* (2017.01)
*H04N 7/18* (2006.01)    *G08G 1/14* (2006.01)
*G06Q 50/30* (2012.01)    *G06N 3/08* (2023.01)

(52) Cooperative Patent Classification (CPC):
**G06V 10/70; G06F 18/00; G06N 3/08; G06Q 50/40;
G06T 7/90; G06V 20/52; G06V 20/54;
G06V 20/586; G06V 20/60; G08G 1/14; H04N 7/18;
H04N 7/183**

(86) International application number:
**PCT/KR2022/012357**

(87) International publication number:
**WO 2023/075107 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.11.2021 KR 20210148128**

(71) Applicant: Vestellalab Inc.
**Seoul 04147 (KR)**

(72) Inventors:
• **JUNG, Sangsu**
  **Uiwang-si, Gyeonggi-do 16034 (KR)**
• **SINGH, Dhananjay**
  **Yongin-si, Gyeonggi-do 17035 (KR)**
• **CHOI, Yung Ji**
  **Seongnam-si, Gyeonggi-do 13597 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **PARKING RECOGNITION METHOD, PARKING RECOGNITION SYSTEM, AND COMPUTER PROGRAM STORED IN RECORDING MEDIUM IN ORDER TO EXECUTE METHOD**

(57)    A parking recognition method of recognizing a vehicle parked on at least one parking space includes obtaining multiple images of the at least one parking space and the vehicle captured by at least one camera, determining a parking recognition point and a camera that is a parking recognition target from among the at least one camera based on an image difference between the plurality of images that are consecutive in time series, setting a Region of interest(ROI) for each of the at least one parking space based on an image captured by the camera that is the parking recognition target at the parking recognition point, setting a vehicle-localization area for the vehicle based on an image captured by the camera that is the parking recognition target at the parking recognition point, and determining whether a vehicle is parked on each of the at least one parking space based on the Region of interest(ROI) and the vehicle-localization area.

FIG. 1

EP 4 428 835 A1

**Description**

Technical Field

Embodiments of the present disclosure relate to a parking recognition method, a parking recognition system, and a computer program stored in a recording medium to execute the parking recognition method, and more particularly, to a parking recognition method of effectively recognizing a vehicle parked on a parking space, a parking recognition system, and a computer program stored in a recording medium to execute the parking recognition method.

Background Art

In general, in large parking lots such as parking lots of buildings, hospitals, airports, department stores, shopping malls, government offices, apartments, and officetels, it is necessary to determines whether a vehicle is parked on a corresponding parking space. This is very necessary to display, to a driver, whether a parking lot is full, the number of available parking spaces, and the like and efficiently manage the parking lot. However, it is difficult to go around and check whether a vehicle is parked on each parking space or whether each parking space is empty. When a separate device is installed on a parking space, a sensor must be installed in each parking area, and thus, installation cost increases, the probability of failure increases due to many equipment, it is difficult to efficiently manage, and maintenance cost increases. Also, from the driver's point of view, because the judgement of a parking space is limited to the driver's view, it is difficult to grasp a parking condition of all parking spaces at a glance.

Disclosure

Technical Problem

To solve various problems including the above problems, the present disclosure provides a parking recognition method of effectively recognizing a vehicle parked on a parking space, a parking recognition system, and a computer program stored in a recording medium to execute the parking recognition method. However, the embodiments are examples, and do not limit the scope of the disclosure.

Technical Solution

According to an aspect of the present disclosure, a parking recognition method of recognizing a vehicle parked on at least one parking space includes obtaining multiple images of at least one parking space and the vehicle captured by at least one camera, determining a parking recognition point and a target camera that executing the parking recognition process from among at least one camera based on an image difference between the plurality of images that are consecutive in time series, setting a parking space occupancy determination area for each of the at least one parking space based on an image captured by the camera that is the parking recognition target at the parking recognition point, setting a vehicle recognition area for the vehicle based on an image captured by the camera that is the parking recognition target at the parking recognition point, and determining whether a vehicle is parked on each of the at least one parking space based on the parking space occupancy determination area and the vehicle recognition area.
The image difference may include a difference in brightness, saturation, and color for each pixel unit of the plurality of images.
The determining of the camera that is the parking recognition target and the parking recognition point may include calculating the image difference between a first image and a second image that are consecutive in time series, when the image difference between the first image and the second image is equal to or greater than a preset threshold value, determining a camera that captures the first image and the second image as the camera that is the parking recognition target, and determining a time at which the second image is captured as the parking recognition point.
The setting of the parking space occupancy determination area may include based on a number of preset parking spaces belonging to a photographing range of the camera that is the parking recognition target, setting the parking space occupancy determination area based on a predicted range for a preset area of the vehicle recognition area for the at least one parking space, and resetting the parking space occupancy determination area based on training data on the predicted range.
The setting of the vehicle recognition area may include inputting an image captured by the camera that is the parking recognition target at the parking recognition point to a pre-trained deep learning network, and setting the vehicle recognition area for the vehicle included in the image captured by the camera that is the parking recognition target at the parking recognition point based on an output value of the pre-trained deep learning network.
The determining whether the vehicle is parked on the at least one parking space may include mapping the parking space occupancy determination area to the vehicle recognition area based on a preset parking space belonging to a photographing range of the camera that is the parking recognition target, and determining whether a preset area of the vehicle recognition area exists within the parking space occupancy determination area.

According to an aspect of the present disclosure, there is provided a computer program stored in a recording medium to execute the parking recognition method.

According to an aspect of the present disclosure, a parking recognition system for recognizing a vehicle parked on at least one parking space includes a parking recognition server configured to obtain multiple images of the at least one parking space and the vehicle captured by at least one camera, determines a parking recognition point and a camera that is a parking recognition target from among the at least one camera based on an image difference between the plurality of images that are consecutive in time series, set a parking space occupancy determination area for the at least one parking space based on an image captured by the camera that is the parking recognition target at the parking recognition point, set a vehicle recognition area for the vehicle based on an image captured by the camera that is the parking recognition target at the parking recognition point, and determines whether a vehicle is parked on the at least one parking space based on the parking space occupancy determination area and the vehicle recognition area.

The image difference may include a difference in brightness, saturation, and color for each pixel unit of the plurality of images.

The parking recognition server may be further configured to calculate the image difference between a first image and a second image that are consecutive in time series, when the image difference is equal to or greater than a preset threshold value, determines a camera that captures the first image and the second image as the camera that is the parking recognition target, and determines a time at which the second image is captured as the parking recognition point.

The parking recognition server may be further configured to, based on a number of preset parking spaces belonging to a photographing range of the camera that is the parking recognition target, set the parking space occupancy determination area based on a predicted range for a preset area of the vehicle recognition area for the at least one parking space, and reset the parking space occupancy determination area based on training data on the predicted range.

The parking recognition server may be further configured to input an image captured by the camera that is the parking recognition target at the parking recognition point to a pre-trained deep learning network, and set the vehicle recognition area for the vehicle included in the image captured by the camera that is the parking recognition target at the parking recognition point based on an output value of the pre-trained deep learning network.

The parking recognition server may be further configured to map the parking space occupancy determination area to the vehicle recognition area based on a preset parking space belonging to a photographing range of the camera that is the parking recognition target, and determines whether a preset area of the vehicle recognition area exists within the parking space occupancy determination area.

Other aspects, features, and advantages of the present disclosure will become more apparent from the detailed description, the claims, and the drawings.

Advantageous Effects

According to an embodiment of the present disclosure described above, a parking recognition method of effectively recognizing a vehicle parked on a parking space, a parking recognition system, and a computer program stored in a recording medium to execute the parking recognition method may be implemented. However, the scope of the disclosure is not limited by these effects.

Description of Drawings

FIG. 1 is a conceptual diagram schematically illustrating a parking recognition system and a camera, according to an embodiment of the present disclosure.

FIG. 2 is a block diagram schematically illustrating elements of a device included in a parking recognition server of FIG. 1.

FIG. 3 is a diagram for describing a configuration of a processor of the parking recognition server, according to an embodiment of the present disclosure.

FIG. 4 is a flowchart illustrating a parking recognition method, according to an embodiment of the present disclosure.

FIG. 5 is a view for describing a parking recognition method, according to an embodiment of the present disclosure.

FIG. 6 is a view for describing a parking recognition method, according to another embodiment of the present disclosure.

FIG. 7 is a view for describing a parking recognition method, according to another embodiment of the present disclosure.

FIG. 8 is a view for describing a parking recognition method, according to another embodiment of the present disclosure.

FIG. 9 is a view for describing a parking recognition method, according to another embodiment of the present disclosure.

FIG. 10 is a view for describing a parking recognition method, according to another embodiment of the present disclosure.

FIG. 11 is a view for describing a parking recognition method, according to another embodiment of the present disclosure.

Mode for Invention

As the disclosure allows for various changes and numerous embodiments, certain embodiments will be illustrated in the drawings and described in the detailed description. Effects and features of the disclosure, and methods for achieving them will be clarified with reference to embodiments described below in detail with reference to the drawings. However, the disclosure is not limited to the following embodiments and may be embodied in various forms.

Hereinafter, embodiments will be described in detail with reference to the accompanying drawings, wherein the same or corresponding elements are denoted by the same reference numerals throughout and a repeated description thereof is omitted.

Although the terms "first," "second," etc. may be used to describe various elements, these elements should not be limited by these terms. These terms are only used to distinguish one element from another. The singular forms "a," "an," and "the" are intended to include the plural forms as well, unless the context clearly indicates otherwise. It will be further understood that the terms "comprises" or "comprising" used herein specify the presence of stated features or components, but do not preclude the presence or addition of one or more other features or components.

Sizes of components in the drawings may be exaggerated or contracted for convenience of explanation. For example, because sizes and thicknesses of elements in the drawings are arbitrarily illustrated for convenience of explanation, the disclosure is not limited thereto.

It will be further understood that, when a region, component, unit, block, or module is referred to as being "on" another region, component, unit, block, or module, it may be directly on the other region, component, unit, block, or module or may be indirectly on the other region, component, unit, block, or module with intervening regions, components, units, blocks, or modules therebetween. It will be further understood that, when a region, component, unit, block, or module is referred to as being connected to another region, component, unit, block, or module, it may be directly connected to the other region, component, unit, block, or module or may be indirectly connected to the other region, component, unit, block, or module with intervening regions, components, units, blocks, or modules therebetween.

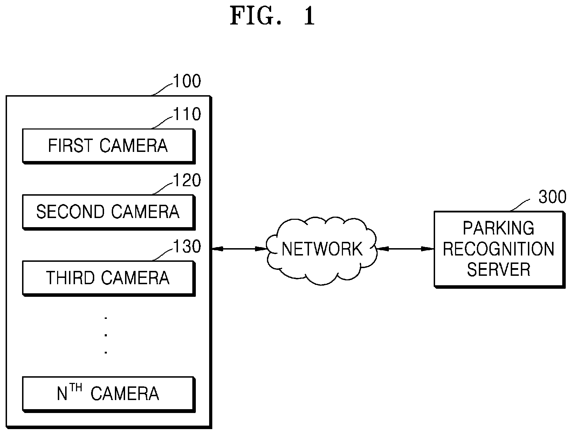

FIG. 1 is a conceptual diagram schematically illustrating a parking recognition system and a camera, according to an embodiment of the present disclosure.

Referring to FIG. 1, a parking recognition system 1 may include a parking recognition server 300. When necessary, the parking recognition system 1 may include the parking recognition server 300 and a camera 100. Elements of the parking recognition system 1 may be connected to each other through a network to communicate with each other. For example, the parking recognition system 300 and the camera 100 may be connected to each other through the network to communicate with each other.

However, the present disclosure is not limited thereto, and the parking recognition system 1 may further include other elements or some elements may be omitted. Also, the parking recognition system 1 may include a camera terminal (edge) as edge computing such as an AI camera equipped with a GPU or an NPU. Some elements of the parking recognition system 1 may be separated into multiple devices, or multiple elements may be combined into one device.

The camera 100 is a hardware device required to capture an image of a parking space of a parking lot and a parked vehicle. The camera 100 may capture an image of the parking space of the parking lot and the parked vehicle and may generate image data of the parking space and the vehicle. Also, the camera 100 may transmit the image data of the parking space and the vehicle to the parking recognition server 300 through the network.

The camera 100 according to an embodiment of the present disclosure may include multiple cameras. For example, as shown in FIG. 1, the parking recognition server 300 may be connected through the network to a first camera 110, a second camera 120, a third camera 130, and an $n^{th}$ camera to communicate with the cameras.

The camera 100 may have an ID. That is, the camera 100 installed in the parking lot may have its unique ID. For example, when the first camera 110, the second camera 120, the third camera 130, and the $n^{th}$ camera are installed in the parking lot, an installation location, a photographing angle, and a photographing direction may be set so that the first camera 110, the second camera 120, the third camera 130, and the $n^{th}$ camera capture images of different parking spaces. In this case, a unique ID may be set to each of the first camera 110, the second camera 120, the third camera 130, and the $n^{th}$ camera. For example, the ID of the camera 100 may include a number, a character such as alphabet, a special character, and/or a symbol.

Also, parking spaces filmed by the first camera 110, the second camera 120, the third camera 130, and the $n^{th}$ camera may be preset. For example, the number of parking spaces photographed by each of the first camera 110, the second camera 120, the third camera 130, and the $n^{th}$ camera may be preset. For example, the first camera 110 may capture images of eight parking spaces.

The parking recognition server 300 may obtain multiple images of at least one parking space and a vehicle photographed by the at least one camera 100. Also, the parking recognition server 300 may determines a parking recognition point and a camera that is a parking recognition target from among the at least one camera based on an image difference between multiple images that are consecutive in time series. Also, the parking recognition server 300 may set a parking space occupancy determination area for each of at least one parking space based on an image captured by the camera that is the parking recognition target at the parking recognition point. Also, the parking recognition server 300 may set a vehicle recognition area for each vehicle based on an image captured by the camera that is the parking recognition target at the parking recognition point. Also, the parking recognition server 300 may determines whether a vehicle is parked on at least one parking space based on the parking space occupancy determination area and the vehicle recognition area. The parking recognition server 300 may be, for example, but is not limited to, a cloud server.

The network may be defined as at least one data link through which data may be transmitted and received between electronic devices and/or servers, and may be a wired and/or wireless communication network. For example, the network may include a content delivery network (CDN) through which various user-selective content may be effectively transmitted. Also, the network may be, but is not limited to, cellular communication (e.g., wide area network (WAN) or UDP), wireless fidelity (Wi-Fi), Bluetooth, Bluetooth low energy, Zigbee or ultra-wideband (UWB).

As such, because the parking recognition system 1 according to an embodiment of the present disclosure determiness whether a vehicle is parked on a parking space based on an image captured by a camera that is a parking recognition target at a parking recognition point, computing power consumption may be minimized.

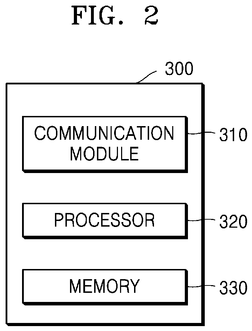

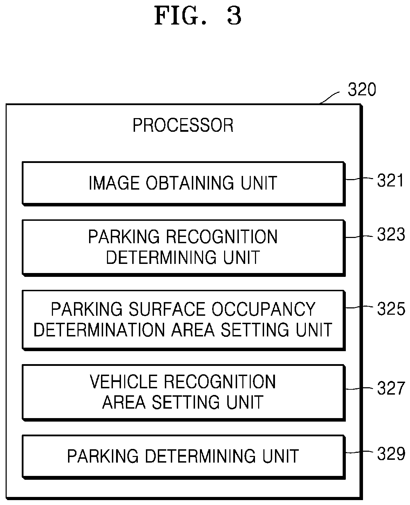

FIG. 2 is a block diagram schematically illustrating elements of a device included in the parking recognition server of FIG. 1. FIG. 3 is a diagram for describing a configuration of a processor of the parking recognition server, according to an embodiment of the present disclosure.

First, referring to FIG. 2, the parking recognition server 300 according to an embodiment of the present disclosure may include a communication module 310, a processor 320, and a memory 330.

The communication module 310 may communicate with various types of external devices or servers according to various communication methods. The communication module 30 may be connected to a communication module of another device through a network to transmit and receive data to and from the communication module. For example, the communication module 310 may be connected to a communication module of the camera 100 via the network to transmit and receive data to and from the communication module.

The processor 320 may perform an operation of controlling the parking recognition system 1 by using various programs stored in the memory 330. The processor 320 may include a processing device such as, but not limited to, a microprocessor, a central processing unit (CPU), a processor core, a multiprocessor, an application-specific integrated circuit (ASIC), or a field programmable gate array (FPGA).

The memory 330 may temporarily or permanently store data processed by the parking recognition server 300. The memory 330 may include a random-access memory (RAM), a read-only memory (ROM), or a permanent mass storage device such as a disk drive, but the present disclosure is not limited thereto.

The parking recognition server 300 as shown in FIG. 2 may further include a storage medium (not shown) that stores various data on an overall operation such as a program for processing or control of the processor 320. The storage medium may store multiple application programs or applications running in the parking recognition server 300, data on the operation of the parking recognition server 300, and instructions. At least some of the application programs may be downloaded from an external server through wireless communication. Also, at least some of the application programs may be provided in the parking recognition server 300 at the time of shipment for a basic function of the parking recognition server 300 The application programs may be stored in the storage medium, and may be driven by the processor 320 to perform an operation (or a function) of the parking recognition server 300.

The parking recognition system 1 and each module or unit included in the parking recognition system 1 may be entirely hardware, or may be partially hardware and partially software. For example, the parking recognition system 1 and each module or unit included in the parking recognition system 1 may collectively refer to hardware for processing or exchanging data of a specific format and content in an electronic communication method and related software. In the specification, the term such as "unit", "module", "device", "terminal", "server", or "system" may be interpreted to refer to a combination of hardware and software driven by the hardware. For example, the hardware may be a data processing device including a central processing unit (CPU) or another processor. Also, the software that is driven by the hardware may be a running process, an object, an executable file, a thread of execution, or a program.

Also, elements of the parking recognition system 1 are not intended to refer to separate devices that are physically distinct from each other. That is, the communication module 310, the processor 320, and the memory 330 of FIG. 2 are just functionally distinguished according to an operation performed by the parking recognition server 300, and do not have to be independently distinguished from each other. According to embodiments, the communication module 310, the processor 320, and the memory 330 may be implemented as separate devices that are physically distinct from each other.

A communication method is not limited, and may include not only a communication method using a communication network (e.g., a mobile communication network, wired Internet, wireless Internet, or broadcasting network) that may be included in the network, but also short-range wireless communication between devices. For example, the network may include at least one of a personal area network (PAN), a local area network (LAN), a campus area network (CAN), a metropolitan area network (MAN), a wide area network (WAN), a broadband network (BBN), and the Internet. Also, the network may have at least one of, but not limited to, a bus network topology, a star network topology, a ring network topology, a mesh network topology, a star-bus network topology, and a tree or hierarchical network topology.

Also, the communication module 310 may communicate with an external server through the network. The communication method is not limited, but the network may be a short-range wireless communication network. For example, the network may be a Bluetooth, BLE, and Wi-Fi communication network.

Also, in other embodiments, the parking recognition server 300 may include more elements than those illustrated in FIG. 2. For example, the parking recognition server 300 may be implemented to include an input/output device, or may further include other elements such as a battery that supplies to internal elements, a charging device, various sensors, and a database.

An internal configuration of the processor 320 of the parking recognition server 300 according to an embodiment of the present disclosure will be described in detail with reference to FIG. 3. The following will be described assuming that the processor 320 described below is the processor 320 of the parking recognition server 300 illustrated in FIG. 1 for easy understanding.

The processor 320 of the parking recognition server 300 according to an embodiment of the present disclosure includes an image obtaining unit 321, a parking recognition determining unit 323, a parking space occupancy determination area setting unit 325, a vehicle recognition area setting unit 327, and a parking determining unit 329. According to some embodiments, elements of the processor 320 may be selectively included in or excluded from the processor 320. Also, according to some embodiments, elements of the processor 320 may be separated or combined to represent a function of the processor 320.

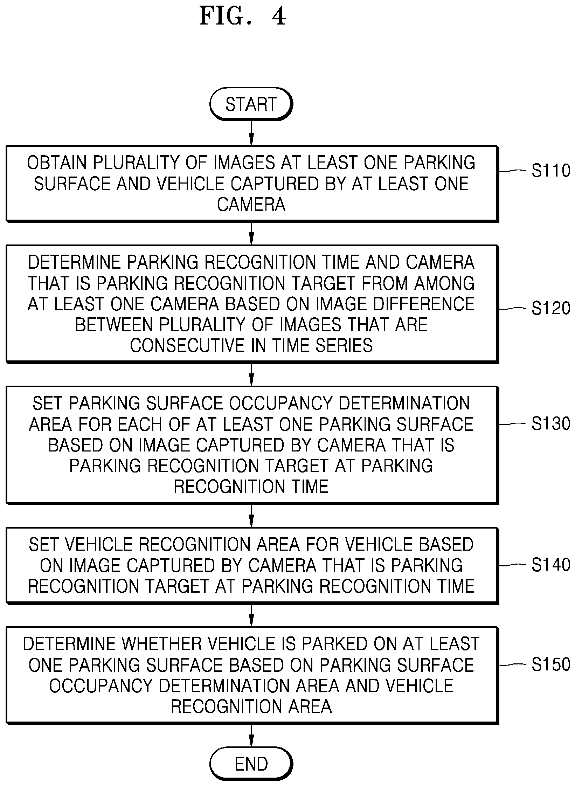

The processor 320 and elements of the processor 320 may control the parking recognition server 300 to perform operations S110 to S150 included in a parking recognition method of FIG. 4. For example, the processor 320 and elements of the processor 320 may be implemented to execute instructions according to the code of at least one program and the code of an operating system included in the memory 330. Elements of the processor 320 may be representations of different functions of the processor 320 performed by the processor 320 according to a command provided by program code stored in the parking recognition server 300. A detailed operation of the processor 320 will be described with reference to a flowchart of a parking recognition method of FIG. 4.

FIG. 4 is a flowchart illustrating a parking recognition method, according to an embodiment of the present disclosure.

In operation S110, the parking recognition server 300 may obtain multiple images of a vehicle and at least one parking space captured by at least one camera. For example, the parking recognition server 300 may obtain multiple images of a vehicle and multiple parking spaces captured by multiple cameras installed in a parking lot. For example, the parking recognition server 300 may obtain multiple images respectively captured by a first camera, a second camera, a third camera, and an $n^{th}$ camera. For example, the plurality of images respectively captured by the first camera, the second camera, the third camera, and the $n^{th}$ camera may include multiple parking spaces included in photographing ranges of the cameras. Also, the plurality of images respectively captured by the first camera, the second camera, the third camera, and the $n^{th}$ camera may include vehicles parked on the plurality of parking spaces included in the photographing ranges of the cameras. For example, eight parking spaces may be included in a photographing range of the first camera. Also, nine parking spaces may be included in a photographing range of the second camera. In this case, the eight parking spaces included in the photographing range of the first camera and the nine parking spaces included in the photographing range of the second camera may be different from each other.

In operation S120, the parking recognition server 300 may determines a parking recognition point and a camera that is a parking recognition target from among the at least one camera based on an image difference between the plurality of images that are consecutive in time series. For example, the parking recognition server 300 may obtain the plurality of images that are consecutive in time series from the plurality of cameras. For example, the parking recognition server 300 may obtain a first image and a second image that are consecutive in time series from the first camera. In this case, the first image may be an image captured at an earlier time than the second image in time series. For example, the parking recognition server 300 may obtain a first image and a second image at a preset time interval from the first camera.

The parking recognition server 300 according to an embodiment of the present disclosure may determines the camera that is the parking recognition target from among the plurality of cameras. Also, the parking recognition server 300 may determines the parking recognition point at which it is determinesd whether a vehicle is parked on the parking space. For example, the parking recognition server 300 may determines the parking recognition point and the camera that is a parking recognition target based on the image difference between the first image and the second image that are consecutive in time series.

In an embodiment of the present disclosure, an image difference between multiple images may include a difference in brightness, saturation, and color for each pixel unit of the plurality of images. For example, the image difference between the first image and the second image may include a difference in brightness, saturation, or color for each pixel unit of the first image and the second image. For example, the parking recognition server 300 may calculate an image difference between multiple images by using image comparison instructions (e.g., background subtraction (AbsDiff)). However, the present disclosure is not limited thereto.

In an embodiment of the present disclosure, the parking recognition server 300 may calculate the image difference between the first image and the second image that are consecutive in time series. For example, the parking recognition server 300 may calculate the image difference between the first image and the second image by using image comparison instructions (e.g., background subtraction (AbsDiff)).

Also, when the image difference is equal to or greater than a preset threshold value, the parking recognition server 300 may determines a camera that captures the first image and the second image as the camera that is the parking recognition target. For example, the image difference may have various criteria, such as a minimum box area that can include all difference areas or the number of pixels. For example, when the preset threshold value for the image difference is 10 and the image difference between the first image and the second image is 10 or more, the parking recognition server 300 may determines a camera that captures the first image and the second image from among the plurality of cameras as the camera that is the parking recognition target. For example, the camera that is the parking recognition target may be determinesd to be the first camera.

Also, the parking recognition server 300 may uses the image difference between the first image and the second image of each of the plurality of cameras and may preferentially determines a camera with a largest image difference value from among the plurality of cameras as the camera that is the parking recognition target. That is, the parking recognition server 300 may set a higher priority of parking recognition calculation to a camera having a larger image difference value.

According to the present disclosure, because a camera that has a priority of parking recognition calculation is selected according to an image difference from among multiple cameras, an object recognition process that consumes a lot of computing power may be more efficiently performed.

Also, the parking recognition server 300 may determines the time at which a second image is captured as the parking recognition point. For example, when the preset threshold value for the image difference is 10 and the image difference between the first image and the second image is 10 or more, the parking recognition server 300 may determines the time at which the second image is captured as the parking recognition point. For example, the parking recognition point may be determinesd as a specific point in time including hours, minutes, and seconds. In operation S130, the parking recognition server 300 may set a parking space occupancy determination area for each of the at least one parking space based on an image captured by the camera that is the parking recognition target at the parking recognition point. For example, the parking recognition server 300 may set Region of interest(ROI) to determines for multiple parking spaces based on an image captured by the first camera at a time when the second image is captured. For example, the parking recognition server 300 may set a parking space occupancy determination area for each of at least one parking space included in the second image based on the second image captured by the first camera. For example, based on the second image captured by the first camera, the parking recognition server 300 may set eight parking space occupancy determination areas for eight parking spaces included in the second image.

In an embodiment of the present disclosure, based on the number of preset parking spaces belonging to a photographing range of the camera that is the parking recognition target, the parking recognition server 300 may set a parking space occupancy determination area based on a predicted range for a preset area of a vehicle recognition area for at least one parking space. For example, based on 8 that is the number of parking spaces belonging to a photographing range of the first camera, the parking recognition server 300 may set parking space occupancy determination areas for eight parking spaces. For example, the number of parking spaces belonging to a photographing range of each camera may be preset. A parking space occupancy determination area may be set based on a predicted range for a preset area of a vehicle recognition area. For example, when a vehicle recognition area is set to a quadrangular shape, a parking space occupancy determination area may be set based on a predicted range for a position of a lower corner of the vehicle recognition area on a road side of the parking lot. That is, the parking space occupancy determination area may be set based on a predicted range of a position at which a lower corner of the vehicle recognition area on a road side of the parking lot is estimated to be located.

In an embodiment of the present disclosure, the parking recognition server 300 may convert the parking space occupancy determination area by using a homographic transformation matrix. Also, the parking recognition server 300 may convert the vehicle recognition area by using a homographic transformation matrix. Also, the parking recognition server 300 may determines whether a preset area of the vehicle recognition area exists within the parking space occupancy determination area by using a homographic transformation matrix.

<Equation 1>

$$p' = H\,p$$

<Equation 2>

$$h: P^2 \rightarrow P^2$$

$$\begin{pmatrix} p_1' \\ p_2' \\ p_3' \end{pmatrix} = \begin{bmatrix} h_{11} & h_{12} & h_{13} \\ h_{21} & h_{22} & h_{23} \\ h_{31} & h_{32} & h_{33} \end{bmatrix} \begin{pmatrix} p_1 \\ p_2 \\ p_3 \end{pmatrix}$$

where H denotes a homographic transformation matrix, $p_1(x_1, y_1)$, $p_2(x_2, y_2)$, and $p_3(x_3, y_3)$ denote multiple arbitrary coordinates of the parking space occupancy determination area before transformation or multiple arbitrary coordinates of the vehicle recognition area before transformation, and $p_1'(x_1', y_1')$, $p_2'(x_2', y_2')$, and $p_3'(x_3', y_3')$ denote multiple corresponding coordinates of the parking space occupancy determination area after transformation or multiple corresponding coordinates of the vehicle recognition area after transformation. A homogeneous coordinate transformation matrix for each corresponding point is as follows.

<Equation 3>

$$s \begin{pmatrix} x_i' \\ y_i' \\ 1 \end{pmatrix} = \begin{bmatrix} h_1 & h_2 & h_3 \\ h_4 & h_5 & h_6 \\ h_7 & h_8 & h_9 \end{bmatrix} \begin{pmatrix} x_i \\ y_i \\ 1 \end{pmatrix}, \qquad i = 1,2,\dots$$

(where s denotes a scale factor for homogeneous coordinate transformation)

In detail, when coordinates of a ceiling portion of a vehicle, that is, coordinates of an upper end portion of the parking recognition area, are used in a calculation process through homographic transformation, an error may occur compared to an actual position in a homographic transformation process. In contrast, according to the present disclosure, because coordinates of a bottom surface of a vehicle, that is, coordinates of a lower end portion of the parking recognition area, are used in a calculation process through homographic transformation, an error does not occur.

Also, the parking recognition server 300 may reset the parking space occupancy determination area based on training data on a predicted range of a preset area of the vehicle recognition area. For example, the parking recognition server 300 may set the predicted range based on training data on a position of a lower corner of the vehicle recognition area on a road side of the parking lot. Also, the parking recognition server 300 may reset the parking space occupancy determination area based on training data on the predicted range. For example, the training data may be accumulated data on the predicted range of the parking recognition server for a preset period.

In operation S140, the parking recognition server 300 may set a vehicle recognition area for the vehicle based on an image captured by the camera that is the parking recognition target at the parking recognition point. For example, the parking recognition server 300 may set a vehicle recognition area for each of vehicles included in the second image based on the second image captured by the first camera.

In an embodiment of the present disclosure, the parking recognition server 300 may input an image captured by the camera that is the parking recognition target at the parking recognition point to a pre-trained deep learning network. For example, the parking recognition server 300 may set a vehicle recognition area for each of vehicles by using a deep learning object detection program (e.g., YOLO v5). For example, the parking recognition server 300 may input the second image captured by the first camera into the deep learning object detection program.

Also, the deep learning network according to an embodiment of the present disclosure may be pre-trained by vehicle image data captured by the plurality of cameras. However, the deep learning network of the present disclosure is not limited thereto, and may be implemented as any of various types of artificial neural networks.

Also, the parking recognition server 300 may set a vehicle recognition area for a vehicle included in an image captured by the camera that is the parking recognition target at the parking recognition point based on an output value of the pre-trained deep learning network. For example, after inputting the second image captured by the first camera into the deep learning object detection program, the parking recognition server 300 may set a vehicle recognition area for vehicles included in the second image based on an output value of the deep learning object detection program. For example, the vehicle recognition area may be implemented as a quadrangular shape including an outer appearance of a vehicle. However, the present disclosure is not limited thereto.

In operation S150, the parking recognition server 300 may determines whether a vehicle is parked on at least one parking space based on the parking space occupancy determination area and the vehicle recognition area. For example, when seven vehicles are parked on eight parking spaces included in the second image captured by the first camera, the parking recognition server may set eight parking space occupancy determination areas and seven vehicle recognition areas for the eight parking spaces included in the second image captured by the first camera. Also, the parking recognition server 300 may determines whether a vehicle is parked for the eight parking spaces.

In an embodiment of the present disclosure, the parking recognition server 300 may map the parking space occupancy determination area to the vehicle recognition area based on a preset parking space belonging to a photographing range of the camera that is the parking recognition target. For example, when seven vehicles are parked on eight parking spaces included in the second image captured by the first camera, the parking recognition server 300 may cause eight parking space occupancy determination areas to correspond to the eight parking spaces included in the second image captured by the first camera. For example, the eight parking spaces and the eight parking space occupancy determination areas may correspond to each other in one-to-one manner. Also, the parking recognition server 300 may cause the seven vehicle recognition areas to correspond to the eight parking spaces included in the second image. For example, except for a parking space on which a vehicle is not parked, the seven parking spaces and the seven vehicle recognition areas may correspond to each other in a one-to-one manner. Also, the parking recognition server may cause the seven parking space occupancy determination areas to correspond to the seven vehicle recognition areas for the eight parking space occupancy determination areas. For example, except for a parking space occupancy determination area corresponding to a parking space on which a vehicle is not parked, the seven parking space occupancy determination areas and the seven vehicle recognition areas may correspond to each other in a one-to-one manner.

Also, the parking recognition server 300 may determines whether a preset area of the vehicle recognition area exists within the parking space occupancy determination area. For example, when the vehicle recognition area is implemented as a quadrangular shape, the parking recognition server 300 may determines whether a lower corner of the vehicle recognition area on a road side of the parking lot exists within the parking space occupancy determination area. For example, the parking recognition server 300 may determines whether a preset area of the vehicle recognition area exists within the parking space occupancy determination area for the vehicle recognition area and the parking space occupancy determination area that are mapped to each other. For example, when the preset area of the vehicle recognition area exists within the parking space occupancy determination area, the parking recognition server 300 may determines that the vehicle is parked on the parking space.

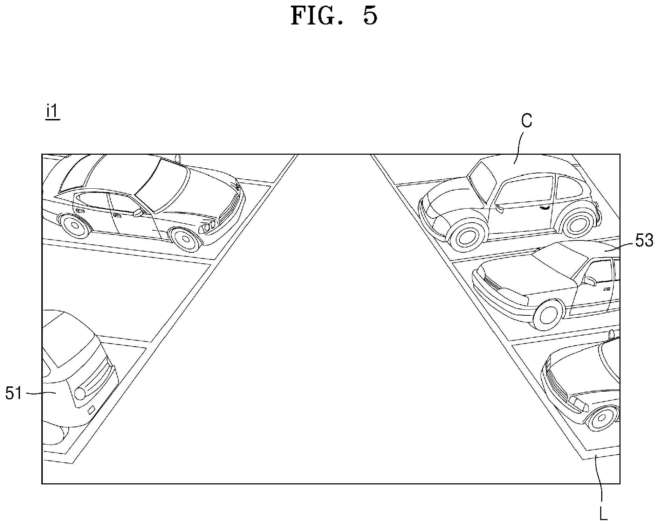

FIGS. 5 to 7 are views for describing a parking recognition method, according to an embodiment of the present disclosure.

First, referring to FIG. 5, an image captured by a camera according to an embodiment of the present disclosure is illustrated. For example, as shown in FIG. 5, multiple vehicles C and parking spaces may be included in the image captured by the camera. For example, the parking spaces may refer to surfaces divided by a parking line L. For example, as shown in FIG. 5, the parking spaces each having a rectangular shape may be formed by the parking line L.

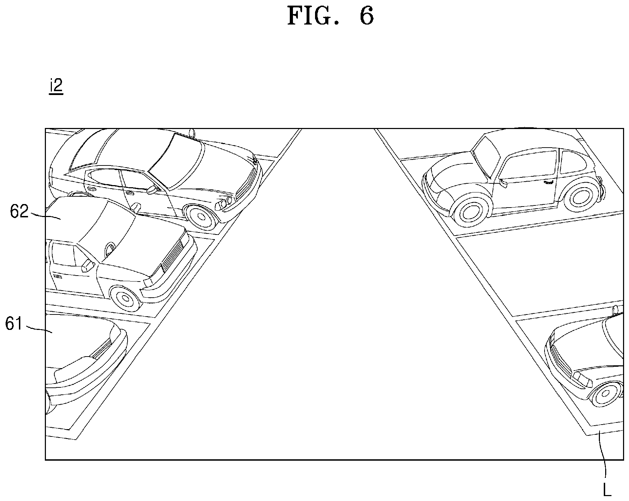

Referring to FIGS. 5 and 6, multiple images that are consecutive in time series may be captured by a camera according to an embodiment of the present disclosure. For example, a first image i1 illustrated in FIG. 5 and a second image i2 illustrated in FIG. 6 may be consecutive in time series. In more detail, a vehicle 62 of the second image i2 is newly added to one empty parking space included in the first image i1. Also, a vehicle 51 parked in the first image i1 is changed to a vehicle 61 of the second image i2. Also, a vehicle 53 parked in the first image i1 leaves a parking space in the second image i2, and the second image i2 includes one empty parking space.

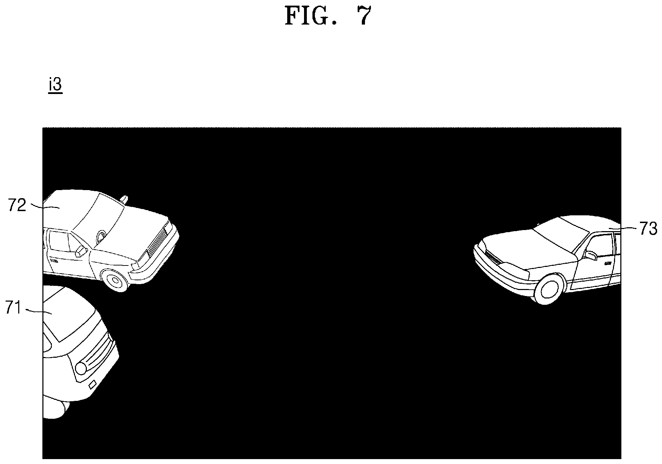

Referring to FIG. 7, a third image i3 in which the parking recognition server according to an embodiment of the present disclosure calculates an image difference between the first image i1 and the second image i2 is illustrated. For example, the parking recognition server may calculate an image difference between the first image i1 and the second image i2 by subtracting the second image i2 from the first image i1. Alternatively, the parking recognition server may calculate an image difference between the first image i1 and the second image i2 by subtracting the first image i1 from the second image i2. For example, as shown in FIG. 7, a portion 72 of the vehicle 62 of the second image i2 which is newly added to one empty parking space included in the first image i1, a portion 71 where the vehicle 51 parked in the first image i1 is changed to the vehicle 61 of the second image i2, and a portion 73 where the vehicle 53 parked in the first image i1 leaves a parking space in the second image i2 are represented with brightness, saturation, and hue different from other portions of the third image i3. However, a representation form of FIG. 7 is merely an example, and the present disclosure is not limited thereto.

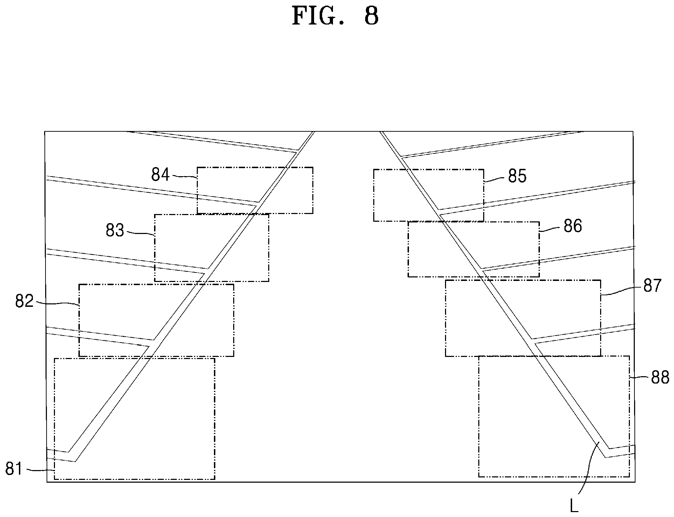

FIGS. 8 to 11 are views for describing a parking recognition method, according to another embodiment of the present disclosure.

First, referring to FIG. 8, a parking recognition server according to an embodiment of the present disclosure may set parking space occupancy determination areas 81, 82, 83, 84, 85, 86, 87, and 88. For example, as shown in FIG. 8, the parking recognition server may set the parking space occupancy determination areas 81, 82, 83, 84, 85, 86, 87, and 88 for respective parking spaces.

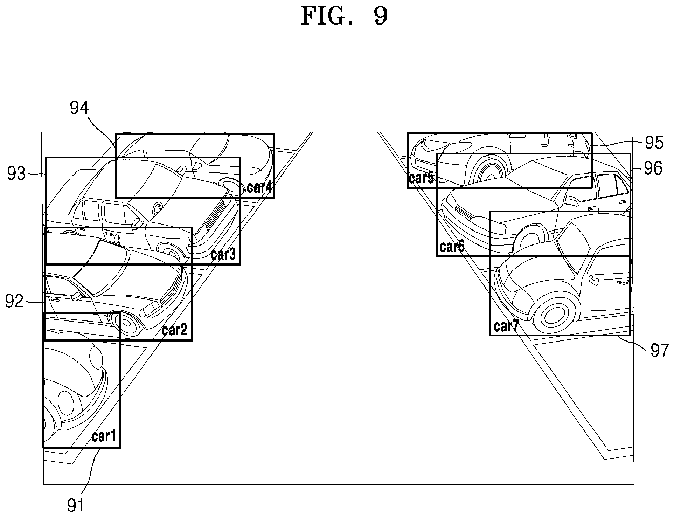

Referring to FIG. 9, the parking recognition server according to an embodiment of the present disclosure may set vehicle recognition areas 91, 92, 93, 94, 95, 96, and 97. For example, as shown in FIG. 9, the parking recognition server may set the vehicle recognition areas 91, 92, 93, 94, 95, 96, and 97 for respective vehicles.

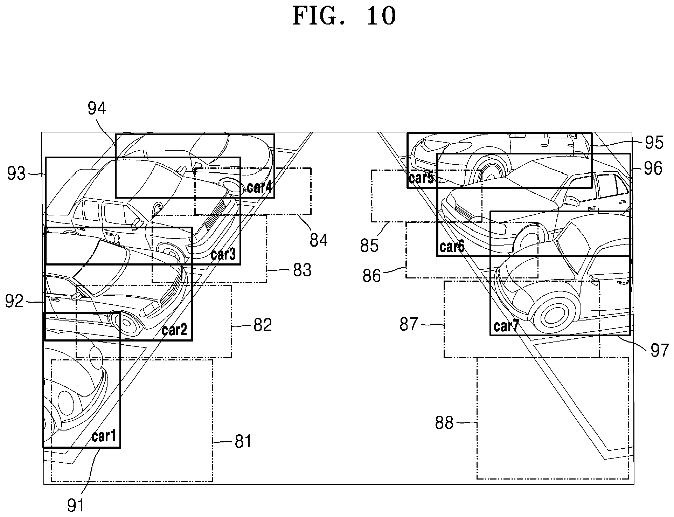

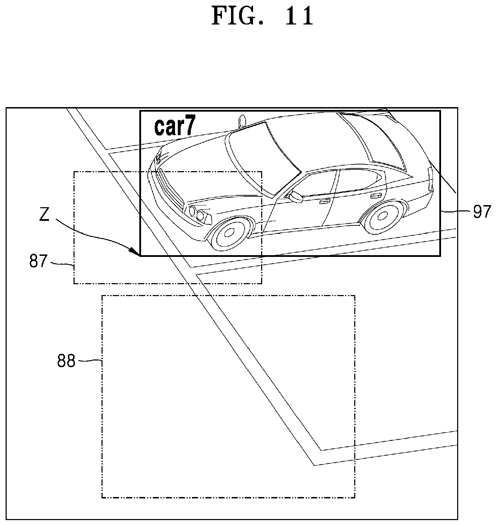

Referring to FIGS. 10 and 11, the parking recognition server according to an embodiment of the present disclosure may determines whether a vehicle is parked on each parking space based on the parking space occupancy determination areas 81, 82, 83, 84, 85, 86, 87, and 88 and the vehicle recognition areas 91, 92, 93, 94, 95, 96, and 97.

The parking recognition server according to an embodiment of the present disclosure may map a parking space occupancy determination area to a vehicle recognition area based on a preset parking space belonging to a photographing range of a camera that is a parking recognition target. The parking space occupancy determination area of each parking space may not match a boundary of the parking space. For example, as shown in FIG. 10, the parking recognition server may map the parking space occupancy determination areas 81, 82, 83, 84, 85, 86, 87, and 88 to the vehicle recognition areas 91, 92, 93, 94, 95, 96, and 97 based on eight parking spaces belonging to a photographing range of a first camera. For example, the first parking space occupancy determination rea 81 and the first vehicle recognition area 91 may be mapped to each other, the second parking space occupancy determination area 82 and the second vehicle recognition area 92 may be mapped to each other, the third parking space occupancy determination area 83 and the third vehicle recognition area 93 may be mapped to each other, the fourth parking space occupancy determination area 84 and the fourth vehicle recognition area 94 may be mapped to each other, the fifth parking space occupancy determination area 85 and the fifth vehicle recognition area 95 may be mapped to each other, the sixth parking space occupancy determination area 86 and the sixth vehicle recognition area 96 may be mapped to each other, and the seventh parking space occupancy determination area 87 and the seventh vehicle recognition area 97 may be mapped to each other.

Also, the parking recognition server may determines whether a preset area of the vehicle recognition area exists within the parking space occupancy determination area. For example, as shown in FIG. 11, the parking recognition server may determines whether a position of a lower corner Z of the seventh vehicle recognition area 97 on a road side of a parking lot exists within the seventh parking space occupancy determination rea 87. For example, in FIG. 11, because the corner of the seventh vehicle recognition area 97 is located within the seventh parking space occupancy determination area 87, the parking recognition server may determines that a vehicle is parked on the seventh parking space. Also, because a corner of the vehicle recognition area is not recognized in the eight parking space occupancy determination area 88, the parking recognition server may determines that a vehicle is not parked on the eighth parking space.

According to an embodiment of the present disclosure, the parking recognition server may output a parking recognition determination result as result data. For example, the parking recognition server may output a parking recognition determination result as result data in an array in array.

For example, the parking recognition server may output result data as 1 when a vehicle is parked on a parking space and may output result data as 0 when a vehicle is not parked on a parking space. For example, the parking recognition server may output result data of [1, 1, 1, 1, 1, 1, 1, 0] for eight parking spaces of the first camera. In this case, vehicles are parked on the first parking space to the seventh parking space, and a vehicle is not parked on the eighth parking space.

According to the present disclosure, because it is determined whether a vehicle is parked on a parking space based on an image difference between multiple images, computing power consumption may be minimized and light weight may be achieved.

Also, according to the present disclosure, because final data including a parking recognition determination result is output as lightweight data, data transmission and utilization may be facilitated.

A device and/or system described herein may be implemented using hardware components, software components, or a combination thereof. A device and an element described in embodiments may be implemented using one or more general-purpose or special purpose computers, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions. A processing device may execute an operating system (OS) and one or more software applications that run on the OS. The processing device also may access, store, manipulate, process, and create data in response to execution of software. For easy understanding, one processing device is used, but it will be understood by one of ordinary skill in the art that a processing device may include multiple processing elements and multiple types of processing elements. For example, the processing device may include multiple processors or a processor and a controller. In addition, other processing configurations, such as parallel processors, are possible.

Software may include a computer program, a piece of code, an instruction, or a combination thereof, to independently or collectively instruct or configure a processing device to operate as desired. Software and/or data may be embodied permanently or temporarily in any type of machine, component, physical or virtual equipment, computer storage medium or device, or a transmitted signal wave, to provide instructions or data to or to be interpreted by a processing device. Software also may be distributed over network coupled computer systems so that the software is stored and executed in a distributed fashion. Software and data may be stored in one or more computer-readable recording media.

A method according to an embodiment may be embodied as program commands executable by various computer means and may be recorded on a computer-readable recording medium. The computer-readable recording medium may include program commands, data files, data structures, and the like separately or in combinations. The program commands recorded on the computer-readable recording medium may be specially designed and configured for the present disclosure or may be well-known to and be usable by one of ordinary skill in the art of computer software. Examples of the computer-readable recording medium include a magnetic medium such as a hard disk, a floppy disk, or a magnetic tape, an optical medium such as a CD-ROM or a DVD, a magneto-optical medium such as a floptical disk, and a hardware device specially configured to store and execute program commands such as a ROM, a RAM, or a flash memory. Examples of the program commands include advanced language code that may be executed by a computer by using an interpreter or the like as well as machine language code made by a compiler. The described hardware device may be configured to operate as one or more software modules in order to perform an operation of an embodiment, and the reverse is the same.

While this disclosure includes specific examples, it will be apparent to one of ordinary skill in the art that various changes in form and details may be made in these examples without departing from the spirit and scope of the claims and their equivalents. Accordingly, the true technical scope of the present disclosure is defined by the technical spirit of the appended claims.

**Claims**

1. A parking recognition method of recognizing a vehicle parked on at least one parking space, the parking recognition method comprising:

   obtaining multiple images of the at least one parking space and the vehicle captured by at least one camera;
   determining a parking recognition point and a camera that is a parking recognition target from among the at least one camera based on an image difference between the plurality of images that are consecutive in time series;
   setting Region of interest(ROI) for each of the at least one parking space based on an image captured by the camera that is the parking recognition target at the parking recognition point;
   setting vehicle-localization area for the vehicle based on an image captured by the camera that is the parking recognition target at the parking recognition point; and
   determining whether a vehicle is parked on each of the at least one parking space based on the Region of interest(ROI) and the vehicle-localization area.

2. The parking recognition method of claim 1, wherein the image difference comprises a difference in brightness, saturation, and hue for each pixel unit of the plurality of images.

3. The parking recognition method of claim 1, wherein the determining of the camera that is the parking recognition target and the parking recognition point comprises:

   calculating the image difference between a first image and a second image that are consecutive in time series;
   when the image difference between the first image and the second image is equal to or greater than a preset threshold value, determining a camera that captures the first image and the second image as the camera that is the parking recognition target; and
   determining the time at which the second image is captured as the parking recognition point.

4. The parking recognition method of claim 1, wherein the setting of the Region of interest(ROI) comprises:

based on a number of preset parking spaces belonging to a photographing range of the camera that is the parking recognition target, setting the Region of interest(ROI) based on a predicted range for a preset area of the vehicle-localization area for the at least one parking space; and

resetting Region of interest(ROI) based on training data on the predicted range.

5. The parking recognition method of claim 1, wherein the setting of the vehicle-localization area comprises:

inputting an image captured by the camera that is the parking recognition target at the parking recognition point to a pre-trained deep learning network; and

setting the vehicle-localization area for the vehicle included in the image captured by the camera that is the parking recognition target at the parking recognition point based on an output value of the pre-trained deep learning network.

6. The parking recognition method of claim 1, wherein the determining whether the vehicle is parked on the at least one parking space comprises:

mapping the Region of interest(ROI) to the vehicle-localization area based on a certain parking space belonging to a photographing range of the camera that is the parking recognition target; and

determining whether a preset area of the vehicle-localization area exists within the Region of interest(ROI).

7. A computer program stored in a recording medium to execute the parking recognition method of any one of claims 1 to 6 by using a computing device.

8. A parking recognition system for recognizing a vehicle parked on at least one parking space, the parking recognition system comprising a parking recognition server configured

to obtain multiple images of the at least one parking space and the vehicle captured by at least one camera, determines a parking recognition point and a camera that is a parking recognition target from among the at least one camera based on an image difference between the plurality of images that are consecutive in time series, to set a Region of interest(ROI) for the at least one parking space based on an image captured by the camera that is the parking recognition target at the parking recognition point, to set a vehicle-localization area for all the vehicles in the image at the parking recognition time based on the image captured by the camera that is the parking recognition target at the parking recognition point, and to determines whether a vehicle is parked on the at least one parking space based on the Region of interest(ROI) and the vehicle-localization area.

9. The parking recognition system of claim 8, wherein the image difference comprises a difference in brightness, saturation, and color for each pixel unit of the plurality of images.

10. The parking recognition system of claim 8, wherein the parking recognition server is further configured to calculate the image difference between first image and second image that are consecutive in time series, when the image difference is equal to or greater than a preset threshold value, determines a camera that captures the first image and the second image as the camera that is the parking recognition target, and determines a time at which the second image is captured as the parking recognition point.

11. The parking recognition system of claim 8, wherein the parking recognition server is further configured to, based on a number of preset parking spaces belonging to a photographing range of the camera that is the parking recognition target, set the Region of interest(ROI) based on a predicted range for a preset area of the vehicle-localization area for the at least one parking space, and modify/adjust/calibrate the Region of interest(ROI) based on training data on the predicted range.

12. The parking recognition system of claim 8, wherein the parking recognition server is further configured to input an image captured by the camera that is the parking recognition target at the parking recognition point to a pre-trained deep learning network, and set the vehicle-localization area for the vehicle included in the image captured by the camera that is the parking recognition target at the parking recognition point based on an output value of the pre-trained deep learning network.

13. The parking recognition system of claim 8, wherein the parking recognition server is further configured to map the Region of interest(ROI) to the vehicle-localization area based on a certain parking space belonging to a photographing range of the camera that is the parking recognition target, and determines whether a preset part of the vehicle-localization area exists within the Region of interest(ROI).

# FIG. 1

# FIG. 2

300

COMMUNICATION
MODULE — 310

PROCESSOR — 320

MEMORY — 330

# FIG. 3

```
                                              320
┌─────────────────────────────────────┐
│              PROCESSOR                │
│                                       │
│  ┌─────────────────────────────────┐ │
│  │      IMAGE OBTAINING UNIT        │─┼── 321
│  └─────────────────────────────────┘ │
│  ┌─────────────────────────────────┐ │
│  │     PARKING RECOGNITION         │─┼── 323
│  │      DETERMINING UNIT           │ │
│  └─────────────────────────────────┘ │
│  ┌─────────────────────────────────┐ │
│  │  PARKING SURFACE OCCUPANCY      │─┼── 325
│  │ DETERMINATION AREA SETTING UNIT │ │
│  └─────────────────────────────────┘ │
│  ┌─────────────────────────────────┐ │
│  │     VEHICLE RECOGNITION         │─┼── 327
│  │      AREA SETTING UNIT          │ │
│  └─────────────────────────────────┘ │
│  ┌─────────────────────────────────┐ │
│  │    PARKING DETERMINING UNIT     │─┼── 329
│  └─────────────────────────────────┘ │
└─────────────────────────────────────┘
```

# FIG. 4

START

OBTAIN PLURALITY OF IMAGES AT LEAST ONE PARKING SURFACE AND VEHICLE CAPTURED BY AT LEAST ONE CAMERA — S110

DETERMINE PARKING RECOGNITION TIME AND CAMERA THAT IS PARKING RECOGNITION TARGET FROM AMONG AT LEAST ONE CAMERA BASED ON IMAGE DIFFERENCE BETWEEN PLURALITY OF IMAGES THAT ARE CONSECUTIVE IN TIME SERIES — S120

SET PARKING SURFACE OCCUPANCY DETERMINATION AREA FOR EACH OF AT LEAST ONE PARKING SURFACE BASED ON IMAGE CAPTURED BY CAMERA THAT IS PARKING RECOGNITION TARGET AT PARKING RECOGNITION TIME — S130

SET VEHICLE RECOGNITION AREA FOR VEHICLE BASED ON IMAGE CAPTURED BY CAMERA THAT IS PARKING RECOGNITION TARGET AT PARKING RECOGNITION TIME — S140

DETERMINE WHETHER VEHICLE IS PARKED ON AT LEAST ONE PARKING SURFACE BASED ON PARKING SURFACE OCCUPANCY DETERMINATION AREA AND VEHICLE RECOGNITION AREA — S150

END

# FIG. 5

## FIG. 6

FIG. 7

# FIG. 8

# FIG. 9

FIG. 10

FIG. 11

## INTERNATIONAL SEARCH REPORT

| International application No. |
|---|
| **PCT/KR2022/012357** |

### A. CLASSIFICATION OF SUBJECT MATTER

**G06V 20/54**(2022.01)i; **G06T 7/90**(2017.01)i; **H04N 7/18**(2006.01)i; **G08G 1/14**(2006.01)i; **G06Q 50/30**(2012.01)i; **G06N 3/08**(2006.01)i

According to International Patent Classification (IPC) or to both national classification and IPC

### B. FIELDS SEARCHED

Minimum documentation searched (classification system followed by classification symbols)

G06V 20/54(2022.01); G06N 3/08(2006.01); G06Q 50/30(2012.01); G06T 3/00(2006.01); G06T 7/11(2017.01); G06T 7/20(2006.01); G08G 1/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라(camera), 주차면(parking surface), 차량(vehicle), 주차 인식(parking recognition), 딥러닝(deep learning)

### C. DOCUMENTS CONSIDERED TO BE RELEVANT

| Category* | Citation of document, with indication, where appropriate, of the relevant passages | Relevant to claim No. |
|---|---|---|
| Y | KR 10-2018-0068247 A (DONG-A UNIVERSITY RESEARCH FOUNDATION FOR INDUSTRY-ACADEMY COOPERATION) 21 June 2018 (2018-06-21)<br>See paragraphs [0032]-[0036] and [0057] and figures 1-3. | 1-13 |
| Y | KR 10-2240638 B1 (NURICON) 15 April 2021 (2021-04-15)<br>See paragraphs [0055] and [0071], claim 1 and figures 5-9. | 1-13 |
| Y | KR 10-2016-0076114 A (SAMSUNG SDS CO., LTD.) 30 June 2016 (2016-06-30)<br>See claim 6 and figures 4-7. | 3,10 |
| Y | KR 10-2020-0084946 A (DEFINE CO., LTD.) 14 July 2020 (2020-07-14)<br>See paragraphs [0025] and [0053] and figures 1-5. | 4-5,11-12 |
| A | KR 10-1986463 B1 (NEXPA SYSTEM CO., LTD.) 07 June 2019 (2019-06-07)<br>See claim 1 and figures 2-8. | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 November 2022** | **17 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/012357**

| Patent document cited in search report | | | Publication date (day/month/year) | Patent family member(s) | | | Publication date (day/month/year) |
|---|---|---|---|---|---|---|---|
| KR | 10-2018-0068247 | A | 21 June 2018 | KR | 10-1908611 | B1 | 10 December 2018 |
| KR | 10-2240638 | B1 | 15 April 2021 | | None | | |
| KR | 10-2016-0076114 | A | 30 June 2016 | | None | | |
| KR | 10-2020-0084946 | A | 14 July 2020 | KR | 10-2143073 | B1 | 11 August 2020 |
| KR | 10-1986463 | B1 | 07 June 2019 | JP | 2021-510428 | A | 22 April 2021 |
| | | | | JP | 7012070 | B2 | 27 January 2022 |
| | | | | WO | 2020-105784 | A1 | 28 May 2020 |

Form PCT/ISA/210 (patent family annex) (July 2022)